Europäisches Patentamt

European Patent Office

Office européen des brevets

(19)

(11) **EP 1 155 160 B1**

(12) **FASCICULE DE BREVET EUROPEEN**

(45) Date de publication et mention
de la délivrance du brevet:
**14.05.2003 Bulletin 2003/20**

(21) Numéro de dépôt: **00901705.4**

(22) Date de dépôt: **02.02.2000**

(51) Int Cl.[7]: **C22C 38/58**, C22C 38/44

(86) Numéro de dépôt international:
**PCT/FR00/00248**

(87) Numéro de publication internationale:
**WO 00/046417 (10.08.2000 Gazette 2000/32)**

(54) **ACIER INOXYDABLE AMAGNETIQUE POUR UTILISATION A TRES BASSE TEMPERATURE ET RESISTANT AUX NEUTRONS ET UTILISATION**

NEUTRONENRESISTENTER ROSTFREIER NICHTMAGNETISCHER STAHL ZUR
VERWENDUNG BEI SEHR NIEDRIGER TEMPERATUR UND VERWENDUNG

NON-MAGNETIC STAINLESS STEEL FOR USE AT VERY LOW TEMPERATURE AND RESISTANT
TO NEUTRONS AND USE

(84) Etats contractants désignés:
**AT BE CH CY DE DK ES FI FR GB GR IE IT LI LU
MC NL PT SE**

(30) Priorité: **02.02.1999 FR 9901110**

(43) Date de publication de la demande:
**21.11.2001 Bulletin 2001/47**

(73) Titulaire: **USINOR INDUSTEEL (France)
92800 Puteaux (FR)**

(72) Inventeur: **FOUEL, Jacques
F-71210 Montchanin (FR)**

(74) Mandataire: **Plaisant, Sophie Marie
arcelor
Immeuble la Pacific
13, cours Valmy
92070 La Défense cédex (FR)**

(56) Documents cités:
**EP-A- 0 254 787         EP-A- 0 416 313
CH-A- 454 582           DE-A- 3 545 182
DE-B- 1 950 932         FR-A- 1 444 807
US-A- 4 554 028**

**Description**

La présente invention est relative à un acier inoxydable austénitique amagnétique pour utilisation à basse température et résistant aux neutrons, destiné notamment à la fabrication d'éléments d'une enveloppe de bobine supraconductrice destinée à créer un champ magnétique de confinement d'un plasma dans une installation de production d'énergie thermonucléaire.

Afin de produire de l'énergie par fusion thermonucléaire, on envisage de réaliser des enceintes dans lesquelles on confinera par un champ magnétique très élevé un plasma chaud et dense d'isotopes de l'hydrogène. Sous l'effet de la pression et de la température, il se produira une réaction de fusion entre les noyaux des isotopes de l'hydrogène, ce qui engendrera un flux de neutrons et un dégagement d'énergie importants. L'énergie dégagée pourra être utilisée pour la production d'électricité.

L'enveloppe des bobines supraconductrices qu'il est prévu de réaliser par assemblage par soudage d'éléments obtenus par moulage, par forgeage ou par laminage, aura des parois dont l'épaisseur pourra atteindre 300 mm. Cette enveloppe devra avoir une perméabilité magnétique la plus proche possible de 1, et de préférence inférieure à 1,01. Elle devra avoir également des propriétés mécaniques élevées et une bonne stabilité physique et mécanique en présence de flux de neutrons. De plus, les champs magnétiques nécessaires étant très élevés, il est prévu de les réaliser à l'aide d'électroaimants supraconducteurs travaillant à très basse température, par exemple au voisinage de 4 K. L'enceinte devra donc conserver ses propriétés jusqu'à des températures de cet ordre. En particulier, la limite d'élasticité Re0,2 devra être supérieure à 800 MPa et le K1C supérieur à 130 MPa.m$^{-1/2}$.

Les aciers inoxydable austénitiques connus, à 18% de Cr, 10% à 12% de Ni et 0% à 2% de Mo, pouvant être utilisés à l'état moulés ne répondent pas à la question posée. En effet, du fait des ségrégations qui apparaissent dans les parois moulées de forte épaisseur, il se forme de la ferrite δ qui détériore les caractéristiques magnétiques. De plus, ces aciers présentent une grande sensibilité à la fissuration à chaud ce qui les rends difficiles à souder.

L'utilisation d'alliages austénitiques à plus forte teneur en nickel que les aciers inoxydables à 25% de Ni et 20% de Cr ou les alliages à base nickel pourrait être envisagée et permettrait d'obtenir des propriétés magnétiques et mécaniques satisfaisantes. Mais ces alliages présentent l'inconvénient d'être trop sensibles aux neutrons. En effet, pour ce type d'application, il n'est pas souhaitable que la teneur en nickel soit trop élevée pour éviter que les pièces deviennent trop radioactives sous l'effet du flux de neutrons

Des exemples d'alliages austénitiques sont divulgués par US-A-4 554 028, FR-A-1 444 807, CH-A-454582.

Il n'existe donc pas d'alliage ou d'acier permettant de fabriquer de façon satisfaisante une enveloppe de bobine supraconductrice de confinement de plasma d'une installation de production d'énergie thermonucléaire.

Le but de la présente invention est de remédier à cet inconvénient en proposant un acier inoxydable adapté à la fabrication d'éléments d'une enveloppe de bobine supraconductrice de confinement de plasma d'une installation de production d'énergie thermonucléaire. Cet acier doit, notamment, être amagnétique, c'est à dire avoir une perméabilité magnétique inférieure à 1,01, en particulier lorsqu'il constitue une paroi de forte épaisseur, avoir des caractéristiques mécaniques élevées et une bonne ductilité à très basse température (en particulier à 4 K), être soudable, être facile à mouler et ne pas contenir trop de nickel.

A cet effet, l'invention a pour objet un acier inoxydable austénitique amagnétique pour utilisation à basse température et résistant aux neutrons, dont la composition chimique comprend, en poids :

$$17\% \leq Cr \leq 19\ \%$$
$$12\ \% \leq Ni \leq 15\ \%$$
$$2,5\ \% \leq Mo \leq 4\ \%$$
$$6\ \% \leq Mn \leq 8\ \%$$
$$0,1\ \% \leq N \leq 0,3\ \%$$
$$C \leq 0,03\ \%$$
$$Si \leq 1,5\ \%$$

- éventuellement du bore en des teneurs inférieures ou égales à 0,005 %, le reste étant du fer et des impuretés résultant de l'élaboration.

De préférence, la composition chimique doit être telle que :

$$[(Cr + 1,4 \times Mo + 1,5 \times Si - 4,99)/(Ni + 30 \times C + 0,5 \times Mn + 26 \times (N - 0,02) + 2,77]^3 \times 12,56 - 7,22 < 0$$

De préférence, la teneur en silicium est supérieure à 0,2 %, la teneur en carbone est supérieure à 0,015 %, et les teneurs en impuretés sont telles que : Co ≤ 0,2 %, P ≤ 0,03 %, S ≤ 0,015 %, Al ≤ 0,06 % et Nb ≤ 0,01 %.

Cet acier a une limite d'élasticité Re0,2 supérieure à 800 MPa, un K1C supérieur à 130 MPa.m$^{-1/2}$ et une perméabilité magnétique inférieure à 1,01, à la température de 4 K.

L'invention concerne également l'utilisation de l'acier selon l'invention pour la fabrication d'une pièce d'un dispositif de production d'énergie thermonucléaire. La pièce peut être obtenue soit par moulage, soit par forgeage, soit à partir d'un produit laminé, et peut avoir une paroi d'épaisseur supérieure à 100 mm. La pièce est, par exemple, un élément d'une enveloppe de bobine supraconductrice de confinement d'un plasma destinée à travailler à une température inférieure à 7 K et devant résister aux neutrons.

L'invention va maintenant être décrite plus en détails et illustrée par un exemple.

La composition chimique, en % en poids, de l'acier comprend :

- de 17 % à 19 % de chrome pour obtenir une inoxydabilité suffisante,
- de 12 % à 15 % de nickel pour une structure austénitique amagnétique ayant une bonne ductilité à basse température,
- de 2,5 % à 4 % de molybdène pour améliorer la résistance à la fissuration à chaud lors du soudage,
- de 6 % à 8 % de manganèse pour améliorer la résistance à la fissuration à chaud lors du soudage et pour obtenir une solubilité suffisante de l'azote,
- de 0,1 % à 0,3 % d'azote pour obtenir des caractéristiques de traction élevées et une bonne stabilité de la structure austénitique à basse température,
- moins de 0,03 % de carbone pour obtenir une ténacité satisfaisante à basse température et éviter les précipitations de carbures dans les zones affectées par la chaleur de soudage ; la teneur en carbone peut être aussi petite qu'on veut, dans la mesure où la limite d'élasticité est obtenue ; de ce point de vue, il est en général souhaitable que la teneur en carbone soit supérieure à 0,015 %,
- éventuellement plus de 0,2 % de silicium pour améliorer la coulabilité de l'acier liquide, mais moins de 1,5 % pour éviter de détériorer les propriétés magnétiques et la ténacité,
- éventuellement du bore pour faciliter la déformation plastique à chaud lors du forgeage ou du laminage, mais moins de 0,005 % pour éviter de détériorer la soudabilité,
- le reste étant du fer et des impuretés résultant de l'élaboration.

Les impuretés sont, notamment :

- le cobalt dont le teneur doit, de préférence, rester inférieure à 0,2 % pour limiter la formation d'isotopes radioactifs sous l'effet du flux de neutrons,
- le phosphore dont le teneur doit, de préférence, rester inférieure à 0,03 % pour obtenir une ténacité satisfaisante et éviter l'apparition de ségrégations en forte épaisseur,
- le soufre dont le teneur doit, de préférence, rester inférieure à 0,015 % pour obtenir une ténacité satisfaisante et éviter l'apparition de ségrégations en forte épaisseur,
- le niobium dont le teneur doit, de préférence, rester inférieure à 0,015 % pour éviter de détériorer la soudabilité,
- l'aluminium qui a servi de désoxydant au cours de l'élaboration, et dont la teneur doit rester inférieure à 0,06 % pour éviter de créer des précipités détériorant la ténacité à froid.

Pour éviter la formation de ferrite δ la composition chimique doit, de préférence, être telle que :

$$[(Cr + 1,4 \times Mo + 1,5 \times Si - 4,99)/(Ni + 30 \times C + 0,5 \times Mn + 26 \times (N - 0,02) + 2.77]^3 \times 12,56 - 7,22 < 0.$$

Cet acier permet d'obtenir les caractéristiques suivantes :

| Température (K) | 293 | 77 | 4 |
|---|---|---|---|
| Rm (MPa) | > 515 | > 1000 | |
| Re0,2 (MPa) | > 255 | > 600 | >800 |
| A% | > 35 | > 40 | |
| KCU (Joules) | | > 70 | |
| K1C (MPa.m$^{-1/2}$) | | | > 130 |

EP 1 155 160 B1

Pour l'application envisagée, seules les caracteristiques à 4 K sont impératives, mais les caractéristiques à 293 K et 77 K, plus faciles à mesurer, sont un moyen de s'assurer que les caractéristiques seront obtenues dans de bonnes conditions à 4 K.

Avec cet acier on a fabriqué une pièce moulée d'1 tonne ayant la forme d'un « U », avec des parois de 300 mm d'épaisseur. Cette pièce expérimentale est représentative des pièces qu'il est prévu de fabriquer pour réaliser une enveloppe de bobine supraconductrice de confinement de plasma d'une installation de production d'énergie thermonucléaire. La pièce a été moulée sans difficultés, c'est à dire, sans apparitions de défauts dus, par exemple, à d'éventuels problèmes de fissuration à chaud.

La composition chimique de l'acier était (en % en poids):

| Cr | Ni | Mn | N | C | Mo | Si | P | S | Nb | B |
|------|----|----|------|------|----|------|------|-------|-------|--------|
| 17,5 | 14 | 6 | 0,18 | 0,02 | 3 | 0,7 | 0,02 | 0,005 | 0,005 | 0,0006 |

La teneur en cobalt était quasiment nulle.

La pièce a été découpée pour obtenir des prélèvements dont les propriétés on été évaluées entre 293 K (20 °C) et 4 K.

On a constaté que l'acier conservait une structure entièrement austénitique jusqu'à 4 K, au moins, et que la perméabilité magnétique était inférieure à 1,01 dans toute l'épaisseur et à toute température.

On a également mesuré les caractéristiques mécaniques qui étaient :

| Température (K) | 293 | 77 | 4 |
|---|---|---|---|
| Rm(MPa) | 528 | 1020 | 1100 |
| Re0,2 (MPa) | 257 | 674 | 859 |
| A % | 47 | 46 | |
| KCU (Joules) | | 177 | |
| K1C (MPa.m$^{-1/2}$) | | | 156 |

Ces résultats, ainsi que le fait que la teneur en nickel n'est pas trop élevée et la teneur en cobalt faible, montrent que l'acier selon l'invention est apte à la fabrication de pièces, et notamment de pièces d'une enveloppe de bobine supraconductrice de confinement de plasma d'une installation de production d'énergie nucléaire de fusion ; ces pièces étant destinées à travailler à une température inférieure à 7 K. Ces pièces peuvent avoir une épaisseur d'au moins 300 mm et peser entre 20 et 40 tonnes.

D'une façon plus générale, l'acier peut être utilisé pour la fabrication de pièces destinées à travailler à très basse température et devant être parfaitement amagnétiques.

**Revendications**

1.  Acier inoxydable austénitique amagnétique pour utilisation à très basse température et résistant aux neutrons, dont la composition chimique comprend, en poids :

    17% ≤ Cr ≤ 19 %
    12 % ≤ Ni ≤ 15 %
    2,5 % ≤ Mo ≤ 4 %
    6 % ≤ Mn ≤ 8 %
    0,1 % ≤ N ≤ 0,3 %
    C ≤ 0,03 %
    Si ≤ 1,5 %

    -   éventuellement du bore en des teneurs inférieures ou égales à 0,005 %,
        le reste étant du fer et des impuretés résultant de l'élaboration telles que Si, Al, S, P, Nb.

2.  Acier selon la revendication 1 **caractérisé en ce que** :

$$[(Cr + 1,4 \times Mo + 1,5 \times Si - 4,99)/(Ni + 30 \times C + 0,5 \times Mn + 26 \times (N - 0,02) + 2,77]^3 \times 12,56 - 7,22 < 0$$

**3.** Acier selon la revendication 1 ou la revendication 2 **caractérisé en ce que** :

Si ≥ 0,2 %

**4.** Acier selon l'une quelconque des revendications 1 à 3 **caractérisé en ce que**:

Al ≤ 0,06 %

**5.** Acier selon l'une quelconque des revendications 1 à 4 **caractérisé en ce que**:

S ≤ 0,015 %

**6.** Acier selon l'une quelconque des revendications 1 à 5 **caractérisé en ce que**:

P ≤ 0,03 %

**7.** Acier selon l'une quelconque des revendications 1 à 6 **caractérisé en ce que**:

Nb ≤ 0,01 %

**8.** Utilisation de l'acier selon l'une quelconque des revendications 1 à 7 pour la fabrication d'une pièce d'un dispositif de production d'énergie thermonucléaire, notamment un élément d'une enveloppe de bobine supraconductrice pour le confinement d'un plasma.

**9.** Utilisation de l'acier selon la revendication 8 **caractérisée en ce que** la pièce est obtenue par moulage.

**10.** Utilisation selon la revendication 8 ou la revendication 9 **caractérisée en ce que** la pièce a une paroi d'épaisseur supérieure à 100 mm.

**11.** Pièce d'une installation de production d'énergie thermonucléaire destinée à travailler à une température inférieure à 7 K et devant résister aux neutrons, **caractérisée en ce qu'**elle est constituée d'un acier selon l'une quelconque des revendications 1 à 7.

**Patentansprüche**

**1.** Nicht magnetischer, nichtrostender, austenitischer Stahl zur Verwendung bei sehr tiefen Temperaturen, der neutronenbeständig ist und dessen massebezogene chemische Zusammensetzung umfasst:

17 % ≤ Cr ≤ 19 %
12 % ≤ Ni ≤ 15 %
2,5 % ≤ Mo ≤ 4%
6 % ≤ Mn ≤ 8%
0,1 % ≤ N ≤ 0,3 %
C ≤ 0,03%
Si ≤ 1,5 %

gegebenenfalls Bor in Mengenanteilen von 0,005 % oder darunter, wobei der Rest aus Eisen und aus der Verarbeitung stammenden Verunreinigungen besteht, wie beispielsweise Si, Al, S, P und Nb.

**2.** Stahl nach Anspruch 1, **dadurch gekennzeichnet, daß** :

$$[(Cr + 1,4 \times Mo + 1,5 \times Si - 4,99)/(Ni + 30 \times C + 0,5 \times Mn + 26 \times (N - 0,02) + 2,77]^3 \times 12,56 - 7,22 < 0.$$

3. Stahl nach Anspruch 1 oder Anspruch 2, **dadurch gekennzeichnet, daß**:

   Si ≥ 0,2 %.

4. Stahl nach einem der Ansprüche 1 bis 3, **dadurch gekennzeichnet, daß**:

   Al ≤ 0,06 %.

5. Stahl nach einem der Ansprüche 1 bis 4, **dadurch gekennzeichnet, daß**:

   S ≤ 0,015 %.

6. Stahl nach einem der Ansprüche 1 bis 5, **dadurch gekennzeichnet, daß**:

   P ≤ 0,03 %.

7. Stahl nach einem der Ansprüche 1 bis 6, **dadurch gekennzeichnet, daß**:

   Nb ≤ 0,01 %.

8. Verwendung des Stahls nach einem der Ansprüche 1 bis 7 zur Herstellung eines Bauteils für eine Vorrichtung zur Erzeugung thermonuklearer Energie und insbesondere zur Herstellung eines Mantelelements einer supraleitenden Spule für den Plasmaeinschluss.

9. Verwendung des Stahls nach Anspruch 8, **dadurch gekennzeichnet, daß** das Bauteil durch Formen hergestellt wird.

10. Verwendung nach Anspruch 8 oder Anspruch 9, **dadurch gekennzeichnet, daß** das Bauteil eine Wand mit einer Dicke über 100 mm aufweist.

11. Bauteil einer Anlage zur Erzeugung thermonuklearer Energie, das dazu vorgesehen ist, bei einer Temperatur unter 7 K zu arbeiten und neutronenbeständig sein sollte, **dadurch gekennzeichnet, daß** es aus einem Stahl nach einem der Ansprüche 1 bis 7 besteht.

**Claims**

1. Non-magnetic austentic stainless steel for use at very low temperature and resistant to neutrons, the chemical composition of which comprises, by weight:

   17% ≤ Cr ≤ 19%
   12% ≤ Ni ≤ 15%
   2.5% ≤ Mo ≤ 4%
   6% ≤ Mn ≤ 8%
   0.1% ≤ N ≤ 0.3%
   C ≤ 0.03%
   Si ≤ 1.5

   - optionally, boron in amounts of less than or equal to 0.005%,

   the balance being iron and impurities, such as Si, Al, S, P and Nb, resulting from the smelting.

2. Steel according to Claim 1, **characterized in that**:

$$[(Cr + 1.4Mo + 1.5\,Si - 4.99)/(Ni + 30C + 0.5Mn + 26\,(N-0.02) + 2.77]^3\ 12.56 - 7.22 < 0.$$

3. Steel according to Claim 1 or Claim 2, **characterized in that**:

   Si ≥ 0.2%.

4. Steel according to any one of Claims 1 to 3, **characterized in that**:

   Al ≤ 0.06%.

5. Steel according to any one of Claims 1 to 4, **characterized in that**:

   S ≤ 0.015%.

6. Steel according to any one of Claims 1 to 5, **characterized in that**:

   P ≤ 0.03%

7. Steel according to any one of Claims 1 to 6, **characterized in that**:

   Nb ≤ 0.01%

8. Use of the steel according to any one of Claims 1 to 7 for the manufacture of a part for a thermonuclear power production system, especially an element of a superconducting coil jacket for confining a plasma.

9. Use of the steel according to Claim 8, **characterized in that** the part is obtained by casting.

10. Use according to Claim 8 or Claim 9, **characterized in that** the part has a wall thickness of greater than 100 mm.

11. Part of a thermonuclear power production plant intended to work at a temperature below 7 K and having to be resistant to neutrons, **characterized in that** it consists of a steel according to any one of Claims 1 to 7.